(19) Europäisches Patentamt / European Patent Office / Office européen des brevets

(11) EP 4 424 639 A1

(12) EUROPEAN PATENT APPLICATION
published in accordance with Art. 153(4) EPC

(43) Date of publication:
04.09.2024 Bulletin 2024/36

(51) International Patent Classification (IPC):
C01F 7/02 (2022.01)    C01F 7/441 (2022.01)

(21) Application number: 21962390.7

(52) Cooperative Patent Classification (CPC):
C01F 7/02; C01F 7/441

(22) Date of filing: 27.10.2021

(86) International application number:
PCT/JP2021/039710

(87) International publication number:
WO 2023/073842 (04.05.2023 Gazette 2023/18)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Nippon Light Metal Company, Ltd.
Tokyo 105-0004 (JP)

(72) Inventor: YOSHIOKA, Masayoshi
Shizuoka-shi, Shizuoka 424-0901 (JP)

(74) Representative: Plasseraud IP
104 Rue de Richelieu
CS92104
75080 Paris Cedex 02 (FR)

(54) **HIGH-PURITY MICROPARTICLE ALUMINA POWDER**

(57) A high-purity microparticle alumina powder is provided which has excellent slurry properties and sintering properties, excellent fluidity and formability, and furthermore has excellent dielectric properties in the highfrequency region. In this high-purity microparticle alumina powder, the 50% particle diameter ($D_{50}$) in the volume particle size distribution and the BET specific surface area ($S_{BET}$) satisfy the relations represented by the formula $D_{50} \leq 0.20\ \mu m$ and the formula $D_{50} \times S_{BET} \leq 2.0 \times 10^{-6}\ m^3/g$, and the content of sodium (Na), silicon (Si), iron (Fe) and calcium (Ca) is each less than or equal to 10 ppm.

FIG. 3

EP 4 424 639 A1

**Description**

TECHNICAL FIELD

The present invention relates to a high-purity fine-grained alumina powder.

BACKGROUND ART

Sintered alumina ($\alpha$-$Al_2O_3$) products have excellent properties, such as high insulating properties, high heat resistance, high wear resistance, and high corrosion resistance. Thus, sintered alumina products are used in a wide range of fields, including electronic components, refractories, abrasives, insulators, spark plugs, fillers, and catalyst supports. Sintered alumina products are produced using alumina powder as a raw material by a process including: forming a molded product of the alumina powder; and firing the molded product. Obtaining a sintered alumina product with high properties requires the alumina powder raw material to have high sinterability, which means that the alumina powder should be fine.

Meanwhile, the production of sintered alumina products is often performed by a process including: forming a slurry of alumina powder; and subjecting the slurry to a wet process. For example, the slurry of alumina powder is subjected to spray granulation to form granules with high moldability, which are subjected to molding. A method of subjecting the slurry of alumina powder to cast molding is also known for the production of large, complex-shaped alumina products. Also known is another method including: forming a coating of the slurry of alumina powder; and firing the coating to form a sintered alumina sheet.

In such wet processes, it is important to properly control the handleability of the slurry, specifically the viscosity and other properties of the slurry. For example, too high a viscosity of the slurry may cause a trouble during granulation or molding. Changes in slurry properties over time may also cause the final product to have unstable and variable properties. Thus, some techniques for controlling the properties of alumina powder and improving the slurry properties thereby are proposed in the art.

For example, Patent Document 1 discloses an alumina powder having a ratio (TBD/LBD) of tapped bulk density (TBD) to loose bulk density (LBD) of 1.5 or more and states that use of the alumina powder enables formation of a thin alumina-containing coating layer having a uniform thickness (see claim 1 and paragraph [0032] of Patent Document 1). Patent Document 1 also states that when the value of TBD/LBD is less than 1.5, the bulk density of individual secondary particles (aggregated particles) contained in the alumina powder becomes too high, and in this case, precipitation of alumina agglomerated particles is likely to occur in an alumina slurry containing the alumina powder, and thus it becomes difficult to ensure the dispersion stability of the alumina powder (see paragraph [0038] of Patent Document 1.

Patent Document 1: PCT International Publication No. WO2018/047871

DISCLOSURE OF THE INVENTION

Problems to be Solved by the Invention

Unfortunately, the techniques proposed in the art are insufficient for achieving both high sinterability of alumina powder and excellent slurry properties. Specifically, the sinterability of alumina powder increases to a certain extent with decreasing alumina particle size. However, as the alumina particle size decreases, the viscosity of alumina powder slurry increases sharply to make difficult its handling for granulation or molding. In the conventional art, alumina powder is commonly subjected to strong grinding to produce fine powder. The alumina fine powder resulting from such strong grinding tends to deteriorate slurry properties. Moreover, such alumina powder has low crystallinity, which is not appropriate as a raw material for the production of sintered alumina products with high properties.

For example, Patent Document 1 states that the D50 value of the alumina powder is preferably 0.45 or more and 0.65 um or less, and if the D50 value is less than 0.45 um, over-crowdedness of aggregation between particles may occur (see paragraph [0044] of Patent Document 1), which suggests that there may be a limit in making alumina fine powder and thus in improving its sinterability.

The conventional alumina powder also has a problem with moldability. Specifically, the fine alumina powder resulting from strong grinding has indefinite particle shapes and thus has low fluidity. Such alumina powder will be hardly molded into a high-density product even by a dry or wet molding process.

In view of such problems with the conventional art, the inventors have conducted intensive studies. As a result, it has been found that an alumina powder satisfying a specific relationship between the particle size $D_{50}$ at 50% in the volume particle size distribution and the BET specific surface area $S_{BET}$ and having a content of impurities, such as sodium, lower than or equal to a specific level can achieve high sinterability and excellent slurry properties. It has also been found that such an alumina powder has favorable fluidity and superior moldability. It has further been found that such an alumina powder is suitable for use as a raw material for sintered products exhibiting high dielectric properties in a high-frequency range in addition to achieving high sinterability, excellent slurry properties, and superior moldability.

It is an object of the present invention, which has been completed based on these findings, to provide a high-purity fine-grained alumina powder that provides excellent slurry properties, has high sinterability, favorable fluidity, and superior moldability, and exhibits high dielectric properties in a high-frequency range.

Means for Solving the Problems

The present invention encompasses aspects (1) to (9) below. In the present description, any numerical range specified using "to" refers to a range including the upper and lower limits of the range. In other words, the expression "X to Y" has the same meaning as "X or more and Y or less".

(1) A high-purity fine-grained alumina powder including alumina particles having a particle size ($D_{50}$) at a cumulative volume of 50% in a volume particle size distribution and a BET specific surface area ($S_{BET}$), the particle size ($D_{50}$) and the BET specific surface area ($S_{BET}$) satisfying relationships represented by the formulae: $D_{50} \leq 0.20$ um; and $D_{50} \times S_{BET} \leq 2.0 \times 10^{-6}$ m³/g, the alumina particles having a sodium (Na) content of 10 ppm or less, a silicon (Si) content of 10 ppm or less, an iron (Fe) content of 10 ppm or less, and a calcium (Ca) content of 10 ppm or less.

(2) The high-purity fine-grained alumina powder according to (1), wherein the particle size ($D_{50}$) at a cumulative volume of 50% in the volume particle size distribution and the BET specific surface area ($S_{BET}$) satisfy relationships represented by the formulae: $D_{50} \leq 0.17$ um; and $D_{50} \times S_{BET} \leq 1.8 \times 10^{-6}$ m³/g.

(3) The alumina powder according to (1) or (2), wherein the alumina powder satisfies a relationship represented by the formula: $1.55 \times 10^{-6}$ m³/g $\leq D_{50} \times S_{BET}$.

(4) The alumina powder according to any one of (1) to (3), wherein the alumina powder has an X-ray diffraction profile having a (113) diffraction line with a full width at half maximum (FWHM) of 0.240° or less.

(5) The alumina powder according to any one of (1) to (4), wherein the alumina powder has a pressurized bulk density (GD) of 2.20 g/cm³ or more.

(6) The alumina powder according to any one of (1) to (5), wherein the alumina powder has particle sizes $D_{10}$, $D_{50}$, and $D_{90}$, respectively, at cumulative volumes of 10%, 50%, and 90% in the volume particle size distribution, and the particle sizes $D_{10}$, $D_{50}$, and $D_{90}$ satisfy a relationship represented by the formula: $(D_{90} - D_{10})/D_{50} \leq 1.5$.

(7) The alumina powder according to any one of (1) to (6), wherein the alumina powder has an $\alpha$-phase content of 80.0% or more.

(8) A method for producing the alumina powder according to any one of (1) to (7), the method including:

providing an aluminum hydroxide powder and $\alpha$-alumina seeds;
mixing the aluminum hydroxide powder with the $\alpha$-alumina seeds to form an aluminum hydroxide-containing raw material containing 1 to 20 mass% of the $\alpha$-alumina seeds;
subjecting the aluminum hydroxide-containing raw material to mechanochemical processing with a dry bead mill to produce amorphous aluminum hydroxide having a crystal water content of 21.0 mass% or less and exhibiting an exothermic peak in the temperature range of 750 to 850°C during differential scanning calorimetric analysis; and
heat-treating the amorphous aluminum hydroxide at a temperature in the range of 900 to 1,100°C to produce an alumina powder;
wherein the $\alpha$-alumina seeds as provided have an average particle size ($D_{50}$) of 0.1 to 0.5 $\mu$m.

(9) The method according to aspect (8), wherein the $\alpha$-alumina seeds as provided have an average particle size ($D_{50}$) of 0.1 to 0.3 um, and the aluminum hydroxide-containing raw material contains 3 to 5 mass% of the $\alpha$-alumina seeds.

Effects of the Invention

The present invention provides a high-purity fine-grained alumina powder that provides excellent slurry properties, has high sinterability, favorable fluidity, and superior moldability, and exhibits high dielectric properties in a high-frequency range.

BRIEF DESCRIPTION OF THE DRAWINGS

FIG. 1 is a schematic diagram showing a cross-section of a hydrostatic pressure-type slurry evaluation system;

FIG. 2 is a diagram showing the principle for slurry evaluation by pressure measurement during settling;

FIG. 3 shows an SEM image of an alumina powder;

FIG. 4 shows an SEM image of an alumina powder;

FIG. 5 shows an SEM image of an alumina powder;

Fig. 6 shows an SEM image of an alumina powder;

FIG. 7 shows a particle size distribution curve of an alumina powder;

FIG. 8 shows a relationship between firing temperature (sintering temperature) and sintered bulk density;

FIG. 9 shows an XRD pattern (X-ray diffraction profile) of an alumina powder;

FIG. 10 shows a relationship between slurry shear rate and viscosity;

FIG. 11 shows a time course of hydrostatic pressure during slurry settling;

FIG. 12 shows an SEM image of an alumina powder;

FIG. 13 shows a particle size distribution curve of an alumina powder; and

FIG. 14 shows a relationship between firing temperature (sintering temperature) and sintered bulk density.

PREFERRED MODE FOR CARRYING OUT THE INVENTION

Specific embodiments of the present invention (hereinafter referred to as "embodiments") will be described. It should be noted that the embodiments described below are not intended to limit the present invention and may be altered or modified without departing from the gist of the present invention.

1. High-Purity Fine-Grained Alumina Powder

An embodiment is directed to a high-purity fine-grained alumina powder (hereinafter also collectively referred to as the "alumina powder") having a particle size ($D_{50}$) at a cumulative volume of 50% in a volume particle size distribution and a BET specific surface area ($S_{BET}$), the particle size ($D_{50}$) and the BET specific surface area ($S_{BET}$) satisfying relationships represented by the formulae: $D_{50} \leq 0.20$ μm and $D_{50} \times S_{BET} \leq 2.0 \times 10^{-6}$ m$^3$/g. In general, the smaller the particle size of the powder, the greater the specific surface area and the greater the number of particle-particle contact points. Moreover, the particle surface activity and the sintering driving force increase with decreasing radius of particle curvature. For high sinterability, therefore, $D_{50}$ is limited to 0.20 um or less.

On the other hand, when simply reduced in size, the powder particles may have a problem in handleability and may rather have low sinterability. Specifically, strong grinding or a similar method for forming a fine powder may cause chipping of the powder particles, which may result in angular particle shapes. A slurry produced with such a powder may have too high a viscosity and an unstable state when subjected to a wet process. Even when subjected to a dry process, such a powder may have a low fluidity and thus have difficulty in being packed with a high density, which may result in low sinterability.

In this regard, the particles with a reduced average particle size ($D_{50}$) and with $D_{50} \times S_{BET}$ kept small can have favorable handleability and improved sinterability. As the particles become more rounded toward spherical, their specific surface area ($S_{BET}$) decreases when their sizes are constant. Therefore, the particles with a reduced $D_{50}$ and $D_{50} \times S_{BET}$ kept at a low level are less likely to have broken cross-sections or chipped portions despite of having small sizes. The alumina powder of this embodiment includes particles with rounded shapes and uniform sizes. Therefore, the alumina powder of this embodiment is less likely to form an unstable slurry with too high a viscosity. The alumina powder of this embodiment also has favorable fluidity and high moldability. These features synergistically act to allow the powder to have high sinterability and favorable handleability. $D_{50}$ may be 0.19 μm or less, 0.18 um or less, 0.17 um or less, or 0.16 um or less. $D_{50} \times S_{BET}$ may be $1.9 \times 10^{-6}$ m$^3$/g or less, $1.8 \times 10^{-6}$ m$^3$/g or less, $1.7 \times 10^{-6}$ m$^3$/g or less, or $1.6 \times 10^{-6}$ m$^3$/g or less. On the other hand, with too small a size, it may become difficult to suppress the effects of handleability degradation. Thus, $D_{50}$ may be 0.05 μm or more, 0.10 um or more, or 0.15 um or more.

The alumina powder of this embodiment is preferably such that the particle size ($D_{50}$) at a cumulative volume of 50% in the volume particle size distribution and the BET specific surface area satisfy relationships represented by the formulae: $D_{50} \leq 0.17$ um and $D_{50} \times S_{BET} \leq 1.8 \times 10^{-6}$ m$^3$/g. The alumina powder with further reduced levels of the average particle size ($D_{50}$) and $D_{50} \times S_{BET}$ can have further improved moldability and sinterability.

The alumina powder of this embodiment also has a sodium (Na) content of 10 ppm or less, a silicon (Si) content of 10 ppm or less, an iron (Fe) content of 10 ppm or less, and a calcium (Ca) content of 10 ppm or less. That is, the Na, Si, Fe, and Ca contents are each 10 ppm or less. Such impurities may form grain boundary phases in the sintered body. For example, sodium (Na) or calcium (Ca) and silicon (Si) may form a glass phase. Calcium (Ca) may also react with the main phase alumina ($Al_2O_3$) to form compounds such as $CaO \cdot 6Al_2O_3$. Such grain boundary phases are undesirable since they can undergo abnormal grain growth. Specifically, abnormal grain growth may cause the formation of locally coarse grains, which may degrade the whole homogeneity of sinterability. This may result in the formation of closed pores and finally lead to low sintered density. Some of the impurities may also enter the main phase to reduce the electrical resistance of the main phase. For example, sodium (Na) can enter the main phase alumina ($Al_2O_3$) to form β-alumina ($Na_2O \cdot 11Al_2O_3$). β-Alumina, which can be used as a solid electrolyte for batteries, has relatively high conductivity. Such a high impurity level may cause a reduction in sinterability or electrical resistance (insulating properties).

In particular, the alumina powder of this embodiment has a small average particle size ($D_{50}$) and a large sintering driving force. Therefore, it is susceptible to the adverse effect of impurities on sintering properties and electrical resistance. Therefore, the content of each of the impurities (Na, Si, Fe, and Ca) is limited to 10 ppm or less. The content of each of the impurities is preferably 9 ppm or less, more preferably 8 ppm or less. In particular, the sodium (Na) content should be kept low since it can reduce the sinterability and insulating properties of the alumina powder. Thus, the sodium (Na) content is more preferably kept at 5 ppm or less.

The alumina powder of this embodiment may satisfy the relationship represented by the formula: $1.55 \times 10^{-6}$ $m^3/g \leq D_{50} \times S_{BET}$. The shape of the alumina particles can become rounded toward exact sphere (maximum). Using the alumina density (3.98 $g/cm^3$), the $D_{50} \times S_{BET}$ value of such exactly spherical particles can be calculated to be 1.51 $\times 10^{-6}$ $m^3/g$. Although some methods for producing such exactly spherical alumina particles are known, such methods are complex and require the use of expensive raw materials. As shown in the examples below, the particles in the alumina powder of this embodiment usually have rounded shapes and uniform particle sizes but are not exactly spherical. The alumina powder of this embodiment can be produced by a simple method with no need to use expensive raw materials. Thus, $D_{50} \times S_{BET}$ does not need to be as low as that of exactly spherical particles, which can keep the production cost low. $D_{50} \times S_{BET}$ may be $1.6 \times 10^{-6}$ $m^3/g$ or more, $1.7 \times 10^{-6}$ $m^3/g$ or more, or $1.8 \times 10^{-6}$ $m^3/g$ or more.

The alumina powder of this embodiment preferably has an X-ray diffraction (XRD) profile having a (113) diffraction line with a full width at half maximum (FWHM) of 0.240° or less, more preferably 0.230° or less. In general, fine powder is produced through strong disintegration (strong grinding). However, alumina powder resulting from such strong-force grinding may contain primary particles with a distorted crystal surface. Such crystal surface distortion may activate the alumina particle surface and have an adverse effect on handleability or slurry properties. In contrast, the alumina powder of this embodiment has less crystal distortion and high crystallinity in spite of including fine primary particles. The FWHM is typically 0.200° or more while it is preferably as low as possible.

The alumina powder of this embodiment preferably has a pressurized bulk density (GD) of 2.20 $g/cm^3$ or more, more preferably 2.30 $g/cm^3$ or more. With such a high pressurized bulk density, the powder can be molded into a product with a high density, which can yield a sintered product with less formation of pores (defects). As used herein, the term "pressurized bulk density" refers to the bulk density of a molded product (molded piece) obtained by the pressure molding of the alumina powder under the conditions of a pressure of 350 $kgf/cm^2$ and no pressurization time (0 minutes). The upper limit of the pressurized bulk density is typically 2.50 $g/cm^3$ or less while it is preferably as high as possible.

The alumina powder preferably has particle sizes $D_{10}$, $D_{50}$, and $D_{90}$ that are respectively at cumulative volumes of 10%, 50%, and 90% in the volume particle size distribution and satisfy the relationship represented by the formula: $(D_{90} - D_{10})/D_{50} \leq 1.5$. With too wide a particle size distribution, the alumina powder may have low sinterability or handleability. Such too wide a particle size distribution is not preferred. $(D_{90} - D_{10})/D_{50}$ may be 1.3 or less or 1.1 or less.

The alumina powder of this embodiment preferably has an α-phase content of 80.0% or more, more preferably 90.0% or more. With an α-phase content of less than 80.0%, the alumina powder may be sintered at a high shrinkage rate and may easily undergo pore formation during sintering. This may hinder the densification of the sintered product and degrade the properties. Therefore, the α-phase content is preferably as high as possible. The α-phase content can be determined by a method including: measuring the X-ray diffraction profile (XRD pattern) of the alumina powder by X-ray diffraction method; and comparing the intensities of X-ray diffraction peaks for (012) and (116) planes in the resulting diffraction pattern with those for a standard sample with an α-phase content of 100%.

The alumina powder of this embodiment with such a feature has high sinterability because of its fine characteristics. In fact, the inventors have confirmed that the alumina powder of this embodiment can be sintered into a dense body at a significantly low temperature as compared to conventional alumina powder.

Moreover, the alumina powder of this embodiment can form a slurry with excellent properties in spite of being fine. In other words, the slurry containing this alumina powder is stable and has low viscosity. In general, the interaction between powder particles increases with decreasing particle size, which may make it difficult to achieve successful dispersion. This may cause the need to apply a stronger shear force to the powder to be dispersed in a slurry. In such a case, the powder may aggregate or form a gel to form an unstable slurry even if it can be temporarily dispersed to form a slurry. In contrast, the alumina powder of this embodiment can be dispersed even with a weak shear force and can form a slurry capable of maintaining a high dispersion state for a long time. This may be because the alumina powder of this embodiment includes particles with rounded shapes and uniform sizes so that the interaction between the particles is small, which may lead to the formation of a slurry with low viscosity and high stability.

The alumina powder of this embodiment also has favorable fluidity and thus high moldability. In other words, the alumina powder with favorable fluidity can be packed at high density during a dry or wet molding process and thus can be molded into a product with high density.

In addition, the alumina powder of this embodiment exhibits high dielectric properties in a high-frequency range. Thus, the alumina powder can be used as a raw material for forming sintered alumina products with low dielectric loss and low transmission loss. In fact, the inventors have confirmed that the alumina powder can form a sintered alumina product with low dielectric loss tangent (tan $\delta$) and low transmission loss in the high-frequency range of 10 GHz or more.

The alumina powder with such features is useful in a wide range of applications, such as electronic components, refractories, abrasives, insulators, spark plugs, fillers, and catalyst supports. In particular, the alumina powder with high sinterability is useful for the production of sintered products by a dry or wet molding process and a sintering process. The alumina powder may also be used as a filler, which is useful as a raw material for the production of composite materials through mixing and kneading the alumina powder and a polymer compound such as a resin.

2. Slurry

An embodiment is directed to a slurry produced by mixing the alumina powder described above, a solvent, such as water, and an optional dispersing agent. The concentration of the alumina powder in the slurry is typically, but not limited to, 10 to 70 mass% or 30 to 70 mass%. The dispersing agent is typically, but not limited to, an ammonium polycarboxylate dispersing agent. The content of the dispersing agent in the slurry may be, for example, 1 to 10 mass%.

The slurry of this embodiment is characterized by having low viscosity at any shear rate. For example, the slurry can maintain a viscosity of 6 mPa·s or less at a shear rate being increased and decreased in the range of 300 to 1,000/s. The slurry is a non-Newtonian fluid with no proportional relationship between shear rate and shear stress. Thus, the flow properties of the slurry are preferably evaluated using flow curve, which shows the relationship between shear rate and shear stress. Such a method for evaluation uses a cone-plate rotational viscometer as specified in JIS Z 8803. The cone-plate rotational viscometer measures the rotational torque applied when the sample (slurry) is sandwiched between the plate and the cone, and the cone is rotated at a constant speed. The shear stress can be calculated from the rotational torque.

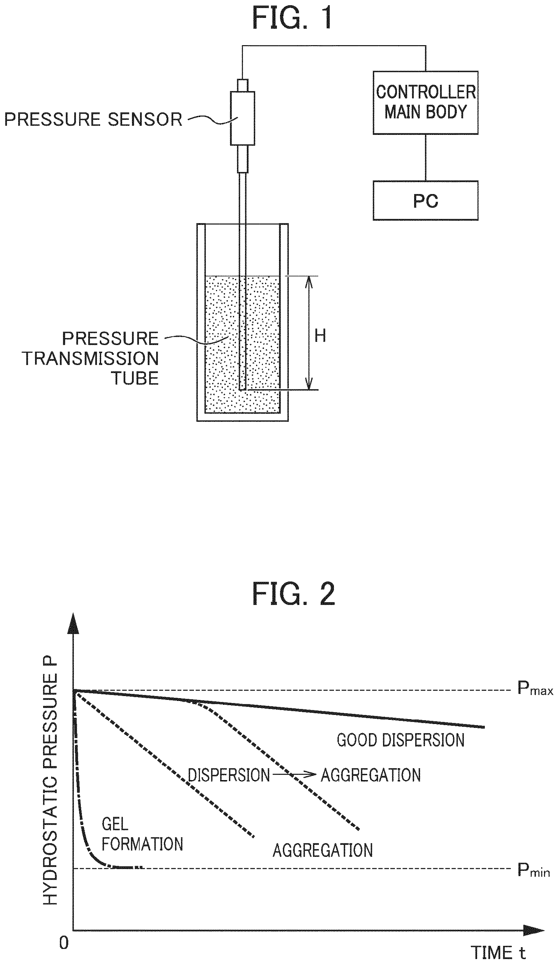

The slurry of this embodiment is also characterized by being stable over a long period of time. The stability of the slurry can be evaluated by measuring how it settles in a gravitational field. Such a method may be measurement of hydrostatic pressure during settling using a hydrostatic pressure-type slurry evaluation system. The principle for the measurement of hydrostatic pressure during settling will be described with reference to FIGS. 1 and 2. As shown in FIG. 1, the hydrostatic pressure-type slurry evaluation system includes a settling tube with a top opening; a pressure transmission tube having an end portion inserted in the settling tube; and a pressure sensor provided at the other end of the pressure transmission tube. The slurry is placed in the settling tube and measured for hydrostatic pressure at a depth H. The hydrostatic pressure is the maximum when the slurry has all particles suspended. On the other hand, the hydrostatic pressure is the minimum when the slurry has all particles settling beyond the depth H. Therefore, measuring the hydrostatic pressure (P) as a function of time (t) allows the evaluation of the dispersion stability of the particles. For example, as shown in FIG. 2, a slurry with high dispersibility shows a minor change in hydrostatic pressure even after a long period of time. On the other hand, if some particles in the slurry aggregate or form a gel, the hydrostatic pressure will decrease. The slurry of this embodiment has a high dispersion state and shows a minor change in hydrostatic pressure.

3. Sintered Alumina Product

An embodiment is directed to a sintered alumina product produced by a process including: molding the alumina powder described above; and firing (sintering) the resulting molded product. The molding may be performed by a known method, such as press molding, cast molding, injection molding, or extrusion molding. The molded product may also be subjected to cold isostatic pressing (CIP). The firing may also be performed under known conditions. For example, the firing may be performed in air, vacuum, or a hydrogen atmosphere under conditions at 1,300 to 1,500°C for 1 to 5 hours.

The sintered alumina product of this embodiment is characterized by exhibiting excellent dielectric properties in a high-frequency range. For example, the sintered alumina product can have a relative permittivity ($\varepsilon$r) of 8.0 to 12.0 or 9.0 to 11.0 at 10 GHz. The sintered alumina product can also have a dielectric loss tangent (tan $\delta$) of $0.20 \times 10^{-4}$ or less or $0.15 \times 10^{-4}$ or less at 10 GHz. As a non-limiting example, the sintered alumina product with such low relative permittivity and low dielectric loss tangent in the high-frequency range is suitable for use as an antenna material for the 5th generation mobile communication system (5G).

In this regard, the 5th generation mobile communication system (5G), which follows the 4th generation (4G), represented by smartphones, has been started as commercial service in spring 2020 in Japan. The 5G system uses extremely high frequency waves, such as millimeter waves at 24 GHz or more, as well as microwaves at less than 6 GH. The 5G system using such high frequencies has three characteristics: high speed and high capacity; highly reliable, low-latency communications; and multiple simultaneous connections.

For the 5G system using high frequencies, antenna materials with low transmission loss are important. The radio waves emitted during wireless communications can be changed to heat through antenna materials. The amount (a) of transmission loss generated during this process is proportional to the product of the radio wave frequency (f), the square root of the relative permittivity ($\varepsilon$r) of the antenna material, and the dielectric loss tangent (tan $\delta$) of the antenna material as shown in Equation (1) below. In Equation (1), K is a proportionality constant.

[Num. 1]

$$a = K \times f \times \sqrt{\varepsilon r} \times \tan\delta \cdots (1)$$

Since transmission loss (a) is proportional to frequency (f), increasing the working frequency requires lower transmission loss of antenna materials. Polytetrafluoroethylene (PTFE) is known as an antenna material for the 4G or earlier frequency range, but the PTFE antenna material may become insufficient as the frequency increases to that for 5G. The sintered alumina product of this embodiment can have a dielectric loss tangent (tan $\delta$) and a transmission loss lower than those of PTFE in a high-frequency range. Thus, the sintered alumina product of this embodiment is promising as a 5G antenna material.

The application of the sintered alumina product of this embodiment should not be limited to the 5G antenna material. It will be understood that the sintered alumina product of this embodiment is useful for non-antenna applications, such as circuit boards, substrates for capacitors and resistors, IC substrates, substrates for sensor components, multilayer boards, packages, RF windows, and semiconductor manufacturing equipment.

4. Method for Producing the Alumina Powder

The alumina powder of the embodiment may be produced by any suitable method that can satisfy the requirements described above. However, a preferred production method is provided, including: providing an aluminum hydroxide powder and $\alpha$-alumina seeds (providing step); mixing the aluminum hydroxide powder with the $\alpha$-alumina seeds to form an aluminum hydroxide-containing raw material containing 1 to 20 mass% of the $\alpha$-alumina seeds (mixing step); subjecting the aluminum hydroxide-containing raw material to mechanochemical processing with a dry bead mill to produce amorphous aluminum hydroxide having a crystal water content of 21.0 mass% or less and exhibiting an exothermic peak in the temperature range of 750 to 850°C during differential scanning calorimetric analysis (mechanochemical processing step); and heat-treating the amorphous aluminum hydroxide at a temperature in the range of 900 to 1,100°C to produce an alumina powder (heat treatment step). The $\alpha$-alumina seeds as provided have an average particle size ($D_{50}$) of 0.1 to 0.5 $\mu$m.

This production method is characterized in that a raw material mixture of an aluminum hydroxide powder and $\alpha$-alumina seeds is subjected to mechanochemical processing and that the resulting specific type of amorphous aluminum hydroxide is used as an intermediate raw material. This amorphous aluminum hydroxide can undergo crystal transformation to $\alpha$-alumina at a remarkably low temperature. Thus, the use of the amorphous aluminum hydroxide as an intermediate raw material allows convenient production of a high-quality $\alpha$-alumina fine powder with a high $\alpha$-phase content. Hereinafter, the details of each of the steps will be described.

Providing Step

The providing step includes providing an aluminum hydroxide powder and $\alpha$-alumina seeds. The aluminum hydroxide powder may be a gibbsite or bayerite powder. In view of the production cost, however, the gibbsite powder is preferred. The aluminum hydroxide powder is preferably a product produced by the Bayer process but it may be a product produced by any suitable method. In view of powder fluidity and ease of handling, the aluminum hydroxide powder preferably has an average particle size ($D_{50}$) of 3 to 50 um and a BET specific surface area ($S_{BET}$) of 0.2 to 5.0 m$^2$/g. General-purpose aluminum hydroxide powders have average particle sizes and BET specific surface areas within these ranges. The production method of this embodiment can be performed using a general-purpose aluminum hydroxide powder and thus can be as advantageous as possible for production cost reduction and convenience.

On the other hand, the $\alpha$-alumina seeds preferably have a high $\alpha$-phase content for low-temperature transformation of the amorphous aluminum hydroxide to $\alpha$-alumina. The $\alpha$-phase content is preferably 900 or more, more preferably 950 or more. For the production of an alumina finer powder with improved moldability and sinterability, the average particle size ($D_{50}$) of the $\alpha$-alumina seeds is limited to 0.1 to 0.5 um. The $\alpha$-alumina seeds are preferably fine. The $D_{50}$ value is preferably 0.1 to 0.3 um. The $\alpha$-alumina seeds preferably have a BET specific surface area ($S_{BET}$) of 5 to 15 m$^2$/g, more preferably 10 to 15 m$^2$/g.

Mixing Step

The mixing step includes mixing the aluminum hydroxide powder with the α-alumina seeds to form an aluminum hydroxide-containing raw material containing 1 to 20 mass% of the α-alumina seeds. The mixing may be performed by any suitable method. The addition of the α-alumina seeds is sufficiently effective in lowering the crystal transformation temperature of the resulting amorphous aluminum hydroxide. A certain amount of the α-alumina seeds are preferably added for the lowering of the temperature for transformation to α-phase. However, too large an amount of the α-alumina seeds may cause the production of coarse alumina powder with low sinterability. Furthermore, high-quality α-alumina seeds are expensive. The content of the α-alumina seeds in the resulting raw material is preferably 1 to 15 mass%, more preferably 1 to 10 mass%, even more preferably 2 to 8 mass%, furthermore preferably 3 to 5 mass%. Using a small amount of particularly fine particles of α-alumina seeds allows the production of an alumina fine powder with high moldability and high sinterability. Thus, it is particularly preferred to use α-alumina seed fine particles with an average particle size ($D_{50}$) of 0.1 to 0.3 um with its content of 3 to 5 mass%.

The α-alumina seeds may be considered to lower the crystal transformation temperature as follows. The phenomenon in which adding a small amount of α-alumina seeds to an aluminum hydroxide raw material can lower the temperature for transformation to α-phase has been known for a long time. In this embodiment, the raw materials, aluminum hydroxide (e.g., gibbsite) and α-alumina seeds, are first mixed to form a raw material powder, which is subjected to mechanochemical processing to produce significantly fine-grained particles. The resulting primary particles of amorphous aluminum hydroxide with an increased specific surface area and the α-alumina seeds can closely aggregate at their interfaces so that more uniform desired interaction can occur between them. As a result, the amorphous aluminum hydroxide can undergo transformation to α-alumina in a low temperature range, where no phase transformation would otherwise inherently occur, without undergoing transformation to an intermediate alumina phase, such as χ-alumina.

Mechanochemical Processing Step

The mechanochemical processing step includes subjecting the resulting aluminum hydroxide-containing raw material to mechanochemical processing with a dry bead mill to produce amorphous aluminum hydroxide. The amorphous aluminum hydroxide is composed mainly of amorphized aluminum hydroxide. Aluminum hydroxide is a compound that has the same composition as that of gibbsite ($Al(OH)_3$) or the like when in a fully crystalline state. Amorphous aluminum hydroxide has no or reduced crystallinity compared to the crystalline aluminum hydroxide and lacks some of the crystal water molecules. Therefore, amorphous aluminum hydroxide differs from fully crystalline aluminum hydroxide in crystalline state and crystal water quantity. The degree of amorphization can be evaluated by measuring the crystal water content (LOI) and measuring the intensity (CPS) of the gibbsite crystal peak for the (002) plane by X-ray diffraction. In this embodiment, amorphous aluminum hydroxide refers to one having a crystal water content of 21.0 mass% or less and having an intensity of gibbsite crystal peak of 350 CPS or less for the (002) plane as measured by X-ray diffraction. In contrast, the crystal water content of non-amorphized gibbsite is about 34.7 mass%.

In this embodiment, the amorphous aluminum hydroxide has a crystal water content (LOI) of 21.0 mass% or less. The amorphous aluminum hydroxide has a crystal water content lower than that of fully crystalline aluminum hydroxide. As described below, the amorphous aluminum hydroxide according to this embodiment can be produced by performing mechanochemical processing with a dry bead mill (amorphization processing) on the raw material mixture of the aluminum hydroxide powder and the α-alumina seeds. During the amorphization processing using a dry bead mill, primary particles of aluminum hydroxide crystals such as gibbsite are ground into fine-range particles with crystal water inclusions being discharged outside. It has been speculated that the grinding can proceed to sufficiently fine primary particles until the crystal water content reaches a low level so that the crystal transformation to α-alumina can proceed at sufficiently low temperature. For the amorphization, the crystal water content is preferably 17.0 mass% or less. The lower limit of the crystal water content may be typically, but not limited to, 15.0 mass% or more.

The amorphous aluminum hydroxide according to this embodiment exhibits an exothermic peak in the temperature range of 750 to 850°C during differential scanning calorimetry. The exothermic peak corresponds to the crystal transformation to α-alumina (a-alumina formation). In general, aluminum hydroxide undergoes crystal transformation to α-alumina at a temperature of 1,100 to 1,200°C. In contrast, the amorphous aluminum hydroxide according to this embodiment undergoes crystal transformation at an exceptionally low temperature of 750 to 850°C. The amorphous aluminum hydroxide preferably exhibits the exothermic peak in the temperature range of 810 to 830°C.

The BET specific surface area of the amorphous aluminum hydroxide particles is typically, but not limited to, 15 to 50 $m^2$/g. The BET specific surface area can be measured using an automatic specific surface area analyzer (FlowSorb II 2300, Micromeritics) according to JIS 1626.

The amorphous aluminum hydroxide preferably has a content of elements other than aluminum (Al), oxygen (O), and hydrogen (H) of 0.1 mass% or less. In particular, the amorphous aluminum hydroxide preferably has a sodium (Na) content of 0.01 mass% or less and a zirconium (Zr) content of 0.05 mass% or less. The content of sodium and zirconium is preferably as low as possible since they can inhibit the sintering during the production of the final sintered ceramic product. Even when an aluminum hydroxide material with a relatively high sodium content, such as gibbsite, is used for the production of the amorphous aluminum hydroxide according to this embodiment, sodium inclusions can come out of the crystals during the amorphization, so that the sodium can be easily washed away. Moreover, when a raw material with a low sodium content is used, the amorphous aluminum hydroxide product can be produced naturally with a low sodium content.

Continuous grinding of crystals increases the newly formed surface area and increases the number of surface atoms and/or molecules lacking the adjacent ones, during which the disordered bonding state can expand beyond the surface layer. This results in activation of ground particles. In the case of dry grinding, particles can aggregate to decrease apparent surface area. The activated surfaces of the ground particles will have a stable reduced chemical potential by adsorbing water and gas from the air. During such a series of reactions, various phase transitions can occur. Such phenomena and effects are called mechanochemical reactions. Processing capable of producing such mechanochemical reactions is called mechanochemical processing.

In the production method of this embodiment, the mechanochemical processing is performed using a dry bead mill. The dry bead mill processing can apply high grinding shear to the raw material mixture and thus can effectively induce mechanochemical reactions. The dry bead mill is a type of medium agitation-type grinding machine, which may include a material inlet, a cylindrical vessel (vessel), a rotary agitating member (agitator) provided in the cylindrical vessel, and a processed powder outlet. A large number of grinding media (beads) are placed in the agitator space in the vessel. During the operation of the dry bead mill, the agitator rotates at high speed to agitate the beads. During the operation, the raw material fed from the material inlet repeatedly collides with the agitator, the beads, and the vessel inner wall and undergoes grinding by impact, shear, and friction forces and mechanochemical reactions, resulting in dry-processed powder, which is discharged from the outlet.

The mechanism of such mechanochemical reactions during the dry bead mill processing may be as described below although its details are unclear. During the processing, the aluminum hydroxide is continuously subjected to high-shear dry grinding. This results in elimination of some of crystal water molecules from the aluminum hydroxide. Besides, the temperature in the apparatus increases due to the friction between the particles being ground, the beads, and the vessel inner wall, which results in the occurrence of phase transition phenomena, such as hydrothermal reaction and dissolution and reprecipitation, in part of the ground particles (aluminum hydroxide). In fact, when gibbsite powder (with a crystal water content of 34.7 mass%) is used as the raw aluminum hydroxide powder and mixed with $\alpha$-alumina seeds at a concentration of 20 mass% to form an aluminum hydroxide-containing raw material, the dry-processed powder resulting from the dry bead mill processing of the aluminum hydroxide-containing raw material should have a crystal water content of 21.0 mass% or less, sometimes, as low as 17.0 mass% or less, while the aluminum hydroxide-containing raw material had a crystal water content of 27.0 mass% or more. This suggests that the dry bead mill processing can eliminate the crystal water.

The dry bead mill is preferably operated at a peripheral agitator speed (rotary speed) of 5.0 to 6.0 m/sec, more preferably 5.0 to 5.5 m/sec, with a bead filling rate of preferably 60 to 70 vol%, more preferably 60 to 65 vol%. The feed rate is preferably 1.0 to 4.0 kg/hour, more preferably 2.0 to 3.0 kg/hour. The higher the peripheral agitator speed and the bead filling rate, the more effective the mechanochemical processing for the production of amorphous aluminum hydroxide with high quality. Moreover, the lower the feed rate, the longer the residence time of the raw material mixture is, and the more the amorphization of aluminum hydroxide proceeds. However, too high a peripheral agitator speed or too high a bead filling rate may make it difficult to perform stable continuous operation. Moreover, too low a feed rate may frequently raise a problem, such as yield reduction caused by ground powder leakage, and may reduce production efficiency. The peripheral agitator speed, bead filling rate, and feed rate falling within the above ranges will lead to efficient production of amorphous aluminum hydroxide with high quality.

During the mechanochemical processing, the aluminum hydroxide-containing raw material may be processed one time (single pass processing) or multiple times (e.g., two or three pass processing) with the dry bead mill. As mentioned above, the lower the feed rate, the more the amorphization of aluminum hydroxide proceeds. In such a case, however, the production efficiency may be low. In this regard, the processing may be performed multiple times, so that even at a high feed rate, the same result can be obtained as in the one-time processing at a low feed rate. This allows the production of amorphous aluminum hydroxide with high quality with constant production efficiency. In a preferred mode, two-pass processing is performed at a feed rate of 2.0 to 3.0 kg/hour. During the mechanochemical processing, if necessary, a grinding aid may be added to the aluminum hydroxide-containing raw material. The grinding aid may be, for example, ethanol.

If a common dry grinding machine other than the dry bead mill, such as a dry ball mill, is used for the processing, the particles may undergo insufficient mechanochemical reaction during the processing, so that the production of amorphous aluminum hydroxide may fail. Such a common dry grinding machine may also have a limitation in grinding particles into fine powders and fail to increase the specific surface area to a sufficient level even for a longer processing time. Moreover, if a wet grinding machine is used for the processing, the particles may undergo insufficient mechanochemical reaction although they can be ground into fine powders with a size of 1 $\mu$m or less. As a result, the production of amorphous aluminum hydroxide may fail. Such a wet grinding machine may also have a problem, such as an increase in contamination (impurity content) or low productivity.

In contrast, the production method of this embodiment including dry processing with beads allows the aluminum hydroxide-containing raw material to undergo sufficient mechanochemical reactions and thus allows convenient production of amorphous aluminum hydroxide with a significantly low crystal transformation temperature to $\alpha$-alumina. In particular, the production method of this embodiment including mechanochemical processing with a dry bead mill allows inexpensive production of amorphous aluminum hydroxide, which would otherwise be highly difficult to produce, even using general-purpose aluminum hydroxide as the starting material. Thus, the production method of this embodiment has high productivity without the need for advanced filtration equipment or any large drying facility, which is required for the wet grinding processing. In addition, continuous processing is possible in a case where the dry bead mill is a continuous type.

Heat Treatment Step

The heat treatment step includes heat-treating (firing) the resulting amorphous aluminum hydroxide at a temperature in the range of 900 to 1,100°C. If necessary, the heat treatment may be followed by subjecting the heat-treated powder to disintegration and washing. The amorphous aluminum hydroxide according to this embodiment, which can undergo crystal transformation to $\alpha$-alumina at a significantly low temperature, can be converted to an $\alpha$-alumina powder with a high $\alpha$-phase content even by heat treatment at a relatively low temperature of 900 to 1,100°C. At such a low heat-treatment temperature, crystal grain growth is also less likely to occur during the heat treatment. This allows the production of a fine-grained alumina powder with a high $\alpha$-phase content. The heat treatment temperature is preferably 900 to 1,050°C, more preferably 950 to 1,050°C. In this way, the high-purity fine-grained alumina powder of the embodiment is successfully produced.

EXAMPLES

Hereinafter, the present invention will be described in more detail with reference to examples. However, the present invention should not be interpreted as being limited to the examples described below.

Experimental Example A

In Experimental Example A, an alumina powder was synthesized by subjecting an aluminum hydroxide power and $\alpha$-alumina seeds to dry bead processing and heat treatment, and the properties of the resulting powder were compared with those of a conventional alumina powder.

(1) Synthesis of Alumina Powder

Example 1 (Example According to the Invention)

Providing Step

An aluminum hydroxide powder and $\alpha$-alumina seeds were provided as raw materials. The aluminum hydroxide powder was gibbsite powder (BHP39 manufactured by Nippon Light Metal Co., Ltd.) produced by the Bayer process. The $\alpha$-alumina seeds were high-purity fine-grained alumina seeds (manufactured by Nippon Light Metal Co., Ltd.). The $\alpha$-alumina seeds (high-purity fine-grained alumina) had an average particle size ($D_{50}$) of 0.18 $\mu$m.

Mixing Step

Next, the $\alpha$-alumina seeds (high-purity fine-grained alumina) was added to and mixed with the aluminum hydroxide powder to form a raw material mixture. In this step, the content of the $\alpha$-alumina seeds in the raw material mixture was adjusted to 10 mass%.

Mechanochemical Processing Step

The resulting raw material mixture was subjected to mechanochemical processing using a dry bead mill (SDA-1 manufactured by Ashizawa Finetech Ltd.) to form a dry-processed powder. The mechanochemical processing was performed under the conditions of a bead filling rate of 60 vol%, a peripheral speed of 4.5 to 5.0 m/sec, and a feed rate of 1.0 kg/hour using medium beads of PSZ (partially stabilized zirconia) and a grinding aid (ethanol), during which the raw material mixture was passed one time through the dry bead mill.

Heat Treatment Step

The resulting dry-processed powder was charged into a high-purity alumina crucible (99% purity). After the charging, the dry-processed powder was heat-treated using a fast-heating electric furnace (Super Burn manufactured by Motoyama Co., Ltd.) to produce a heat-treated powder ($\alpha$-alumina powder). The heat treatment was performed under the conditions of a rate of temperature increase of 200°C/hour, a maximum temperature of 1,070°C, and a holding time of 30 minutes.

Washing Step

Next, for the removal of sodium, the resulting heat-treated powder was stirred and washed in pure water in an amount two times the mass of the powder and further washed with water in an amount five times the mass of the powder. The washed heat-treated powder was then dried in a drying machine under conditions at 110°C for 24 hours.

Disintegration Step

The dried heat-treated powder was disintegrated using a ball mill. The process yielded an alumina powder of Example 1.

Example 2 (Comparative Example)

A commercially available high-purity alumina powder (from an external source) was obtained and used as an alumina powder of Example 2.

Example 3 (Comparative Example)

A development product (LS Ultrafine Powder) was used as an alumina powder of Example 3.

Example 4 (Comparative Example)

A commercially available high-purity alumina powder (AHP200 manufactured by Nippon Light Metal Co., Ltd.) was obtained and used as an alumina powder of Example 4.

(2) Evaluation of Alumina Powders

The alumina powders of Examples 1 to 4 were each evaluated for various properties by the procedures shown below.

SEM Observation

The alumina powder was observed using a scanning electron microscope (SEM). The observation was performed at a magnification of 50,000× using a scanning electron microscope (S4700 manufactured by Hitachi High-Tech Science Corporation or JSM-7200 manufactured by JEOL Ltd.).

Impurity Content

The amount of impurities (Si, Fe, and Ca) in the alumina powder was measured using an ICP emission spectrometer (SP3100 manufactured by Seiko Instruments Inc.). First, the alumina powder was placed in a pressure decomposition vessel and then subjected to pressure decomposition using sulfuric acid in a drying machine for 10 hours. Subsequently, the product resulting from the pressure decomposition was diluted with water to a constant volume to form a sample solution. The sample solution was placed in the analyzer and measured for emission intensity at specific wavelengths for the respective elements. A calibration curve was determined at the same time, and the concentration of each element was then calculated using the calibration curve.

The impurity (Na) content of the alumina powder was measured using an atomic absorption spectrometer (Polarized Zeeman Atomic Absorption Spectrophotometer Z-2000 manufactured by Hitachi High-Technologies Corporation). First, the alumina powder was placed in a pressure decomposition vessel, and the resulting product was diluted with water to a constant volume to form a sample solution. The sample vessel was placed in the spectrometer and measured for absorbance at a wavelength of 589.0 nm using an air-acetylene flame. The absorbance of the standard solution was measured at the same time, and the Na content of the sample was calculated using it.

Powder Properties (BET Specific Surface Area)

The BET specific surface area ($S_{BET}$) of the alumina powder was measured using an automatic specific surface area analyzer (FlowSorb II 2300 manufactured by Micromeritics) according to JIS 1626.

Powder Properties (Particle Size)

The alumina powder was measured for particle size using a laser diffraction scattering particle size distribution analyzer (Microtrac MT3300 manufactured by Nikkiso Co., Ltd.). First, the alumina powder was dispersed using a homogenizer (US-600T manufactured by Nihon Seimitsu Seisakusho) under the conditions of 600 W, 20 kHz, and 1 minute. The resulting alumina powder dispersion was then introduced into the analyzer and measured for particle size using the analyzer. The resulting data was analyzed to determine the particles sizes $D_{10}$, $D_{50}$ (average particle size), and $D_{90}$ at cumulative volumes of 10%, 50%, and 90% in the resulting volume particle size distribution.

Powder Properties (Pressurized Bulk Density)

The pressurized bulk density (GD) of the alumina powder was measured as follows. First, the alumina powder was placed in a mold and pressurized and molded at a pressure of 350 kgf/cm$^2$. In this process, no time (0 minutes) was spent for the pressurization. The mass and size of the resulting molded piece (molded product) were measured and used to calculate the bulk density.

Sinterability

The alumina powder was evaluated for sinterability. First, the alumina powder was charged into a mold and uniaxially press-molded at a pressure of 350 kgf/cm$^2$. The resulting compact was fired in a fast-heating electric furnace (Super Burn manufactured by Motoyama Co., Ltd.) to produce a sintered body. The firing was performed under the conditions of a rate of temperature increase of 200°C/hour, a maximum temperature (sintering temperature) of 1,350 to 1,600°C, and a holding time of 2 hours. The density (bulk density) of the resulting sintered body was measured by Archimedes' method.

X-Ray Diffraction

The alumina powder was analyzed by powder X-ray diffraction (XRD) method. The analysis was performed as follows. First, the alumina powder was placed on a special sample plate and lightly pressed and spread to form a measurement sample with a size of 20 mm × 20 mm × 0.5 mm. Next, the X-ray diffraction pattern of the measurement sample was obtained using an X-ray diffractometer. The X-ray diffraction conditions were as follows.
System: RINT manufactured by Rigaku Corporation (Ultima II, horizontal sample mounting)
X-ray source: CuKα ray
Voltage: 40 kV
Current: 40 mA
Scanning speed: 4°/minute
Sampling width: 0.05°
Start angle: 5°
End angle: 90°

From the resulting diffraction pattern, the peaks (diffraction lines) for the (012), (104), (113), (116), and (300) planes (α-alumina crystal peaks) were picked up, and their full width at half maximum (FWHM) values were calculated. Moreover, the intensities (diffraction intensities) of the peaks for the (012) and (116) planes were compared with those of a standard sample (a-phase content 100%) to determine the α-phase content of the alumina powder.

Slurry Properties (Viscosity)

A slurry (suspension) of the alumina powder was prepared and evaluated for viscosity. First, 200 g of the alumina powder, 164 g of pure water, and 4 g of an ammonium polycarboxylate dispersing agent (Nopcosperce 5600 manufactured by San Nopco Limited) were placed together with 600 g of $\varphi$20 medium balls in a 1 L-volume pot. The pot was then rotated at a speed of 72 rpm for 2 hours to mix the contents. This produced a slurry with a concentration of 55 mass%.

The viscosity of the resulting slurry was measured using a precision cone-plate type rotational viscometer (RST-CPS manufactured by Eko Instruments Co., Ltd.). Specifically, the viscosity was measured at 25°C every second while the shear rate was changed from 1/second to 1,000/second over 60 seconds.

Slurry Properties (Hydrostatic Pressure during Settling) The slurry was measured for hydrostatic pressure during settling using a hydrostatic pressure-type slurry evaluation system (HYSTAP-3, Japan Hotel Goods Supply Co., Ltd.). The slurry used for the measurement was the same as that prepared for the viscosity evaluation. The rate of settling was calculated taking into account hindered settling, in which the particles dispersed in the fluid settled interfering with one another, and a high dispersion line was made based on the rate of settling. The rate of settling was calculated using an alumina particle density of 3.98 g/cm$^3$, a water density of 1.00 g/cm$^3$, a gravitational acceleration of 9.80665 m/s$^2$, and a medium (water) viscosity of 0.00089 Pa·s (25°C).

Dielectric Properties of Sintered Product

A sintered product was prepared from the alumina powder and evaluated for dielectric properties. First, the alumina powder was charged into a mold and uniaxially press-molded at a pressure of 19.6 MPa. Subsequently, the resulting compact was vacuum-packed and then subjected to cold isostatic pressing (CIP) at a pressure of 245 MPa for 1 minute. The CIP-treated compact was fired in a fast-heating electric furnace (Super Burn manufactured by Motoyama Co., Ltd.) to form a sintered product. The firing was performed under the conditions of a rate of temperature increase of 200°C/hour, a maximum temperature of 1,500°C, and a holding time of 2 hours.

The resulting sintered product was evaluated for dielectric properties at 1 GHz, 5 GHz, and 10 GHz. The dielectric value at 1 GHz was measured at room temperature under the air atmosphere using an impedance analyzer (E4991B manufactured by Keysight Technologies). On the other hand, the dielectric values at 5 GHz and 10 GHz were measured according to JIS 1627 under the conditions of a temperature of 24°C and a humidity of 45% in the atmosphere using a microwave PNA network analyzer (N5227A manufactured by Keysight Technologies).

(3) Evaluation Results

SEM Observation

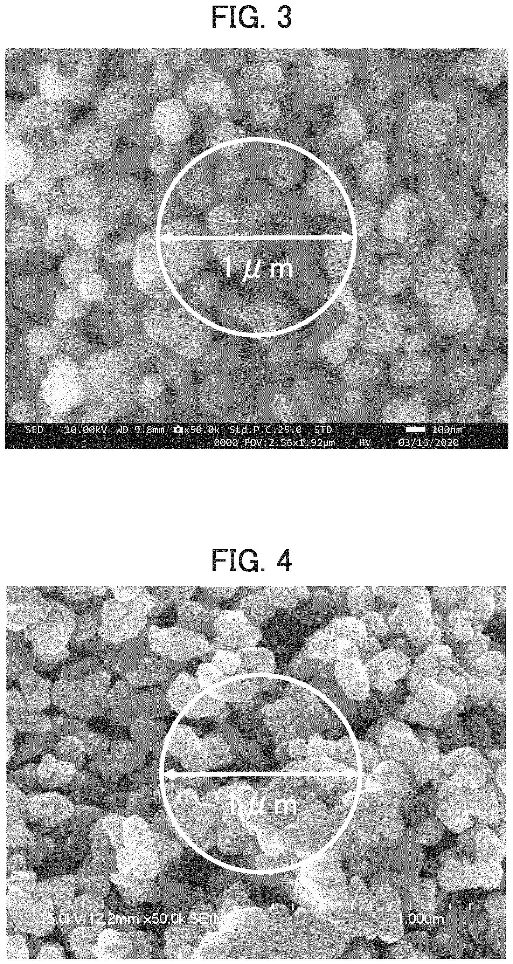

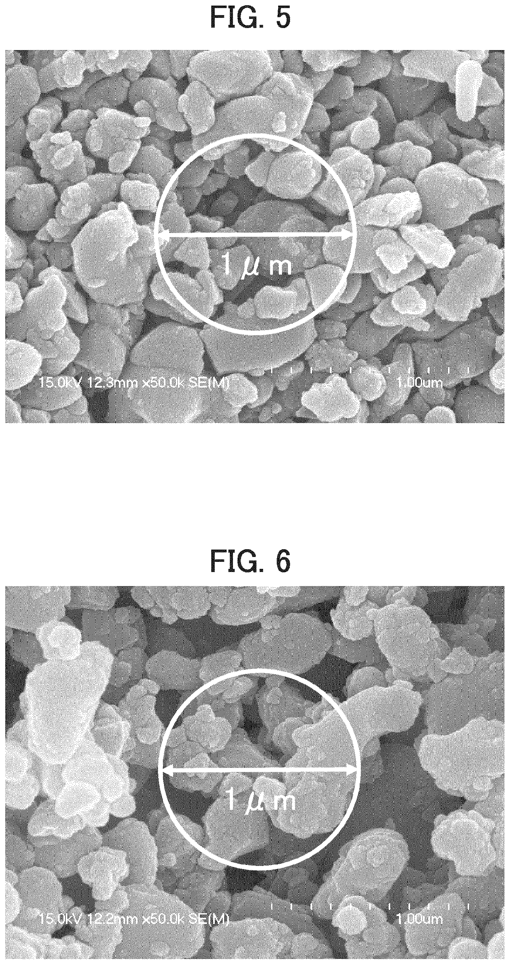

The SEM images of the alumina powders of Examples 1 to 4 are shown in FIGS. 3 to 6, respectively. The particles of the alumina powder of Example 1 (an example according to the present invention) were fine and had uniform sizes. The particles also had rounded shapes. The particles had few broken cross-sections with no chipped portions observed (FIG. 3). On the other hand, the particles of the alumina powder of Example 2 (a comparative example) had angular shapes although they were fine. The particles of the alumina powder of Example 2 were observed to have a small number of broken cross-sections and chipped portions (FIG. 4). The particles of the alumina powders of Examples 3 and 4 (comparative examples) had varieties in size. The particles of the alumina powders of Examples 3 and 4 were also observed to have many broken cross-sections and chipped portions (FIGS. 5 and 6).

Impurity Content and Powder Properties

Table 1 shows the impurity content and properties of the alumina powders of Examples 1 to 4. The sodium (Na), silicon (Si), iron (Fe), and calcium (Ca) contents of the alumina powder of Example 1 (an example according to the present invention) were each as low as at most 10 ppm. On the other hand, the content of some of these impurities in the alumina powders of Examples 2 to 4 (comparative examples) was more than 10 ppm. In particular, the Na, Si, Fe, and Ca contents of the alumina powder of Example 3 were each as high as 100 to 200 ppm.

The alumina powder of Example 1 satisfied the conditions: $D_{50} \leq 0.20\ \mu m$ and $D_{50} \times S_{BET} \leq 2.0 \times 10^{-6}\ m^3/g$. On the other hand, the $D_{50} \times S_{BET}$ value for the alumina powders of Examples 2 to 4 was more than $2.0 \times 10^{-6}\ m^3/g$. In particular, the alumina powder of Example 2 had a large $S_{BET}$ value and thus provided a large $D_{50} \times S_{BET}$ value although its $D_{50}$ value was similar to that of Example 1.

[Table 1]

| Table 1: Impurity content and powder properties | | | | | | | | | | |
|---|---|---|---|---|---|---|---|---|---|---|
| | Impurity content (ppm) | | | | $D_{10}$ ($\mu$m) | $D_{50}$ ($\mu$m) | $D_{90}$ ($\mu$m) | $(D_{90}-D_{10})$ /$D_{50}$ | $S_{BET}$ (m$^2$/g) | $D_{50} \times S_{BET}$ ($10^{-6}$ m$^3$/g) | GD (g/cm$^3$) |
| | Na | Si | Fe | Ca | | | | | | | |
| Example 1 | 6 | 8 | 2 | 1 | 0.11 | 0.18 | 0.28 | 0.97 | 10.4 | 1.9 | 2.29 |
| Example 2* | 2 | 42 | 3 | 5 | 0.11 | 0.19 | 0.56 | 2.35 | 13.1 | 2.5 | 2.18 |
| Example 3* | 200 | 100 | 200 | 100 | 0.11 | 0.23 | 0.70 | 2.59 | 13.9 | 3.2 | 2.18 |
| Example 4* | 25 | 7 | 2 | 2 | 0.18 | 0.45 | 1.27 | 2.54 | 6.6 | 3.0 | 2.15 |
| Note: The symbol "*" indicates a comparative example. | | | | | | | | | | | |

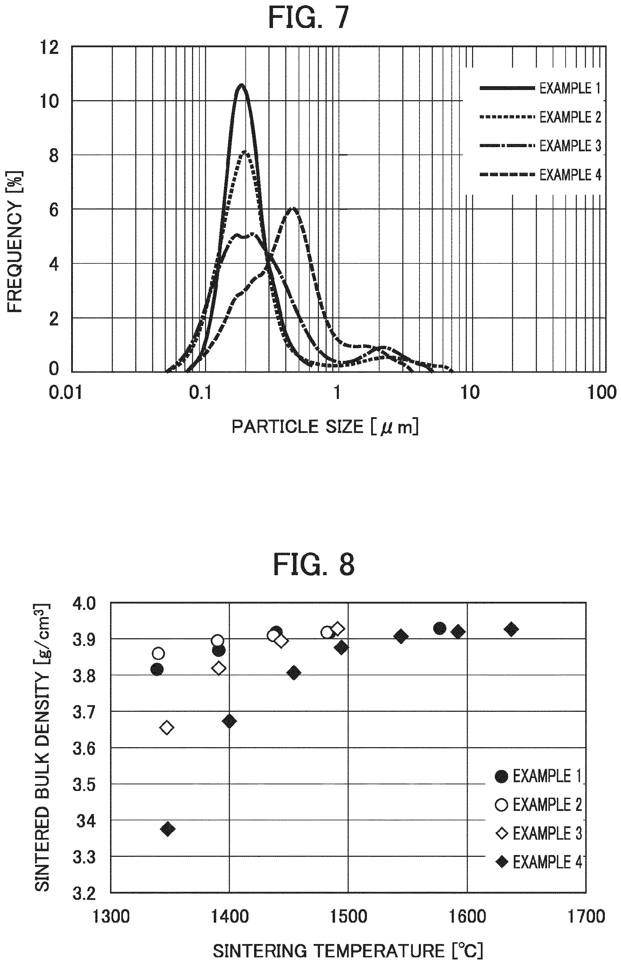

FIG. 7 shows the particle size distribution curves of the alumina powders of Examples 1 to 4. In FIG. 7, the horizontal axis represents particle size (particle diameter), and the vertical axis represents frequency. The alumina powder of Example 1 showed a sharp particle size distribution with relatively small variations in size around a value of 0.2 um. The alumina powder of Example 2 contained particles with sizes of several um although it showed a sharp particle size distribution around a value of 0.2 um. Such large particles broadened the particle size distribution as a whole. The alumina powder of Example 3 showed a particle size distribution broader than that of Example 1 or 2. The alumina powder of Example 3 contained no small number of particles with sizes of several um. The alumina powder of Example 4 had a large central size of 0.4 to 0.5 um and showed a broad particle size distribution.

Sinterability

The density (bulk density) of the sintered products made from the alumina powders of Examples 1 to 4 are shown in FIG. 8. The alumina powders of Examples 1 and 2 underwent densification even at a relative low firing temperature and already exhibited a density of at least 3.8 g/cm$^3$ at 1,350°C. The density also reached an almost constant value at 1,450°C or more. On the other hand, the densification of the alumina powder of Example 3 was lower than that of Example 1 or 2, and at 1,350°C, the resulting density remained at 3.6 to 3.7 g/cm$^3$. The densification of the alumina powder of Example 4 is the lowest, and at 1,350°C, the resulting density was as low as less than 3.4 g/cm$^3$. At 1,550°C or more, the density finally reached a constant level.

The resulting sinterability correlates with the resulting average particle size ($D_{50}$). Specifically, the high sinterability of the alumina powder of Example 1 or 2 should be attributed to the small $D_{50}$ of 0.18 to 0.19 um while the low sinterability of the alumina powder of Example 3 or 4 should be attributed to the large $D_{50}$ of 0.23 to 0.45 $\mu$m.

X-ray Diffraction

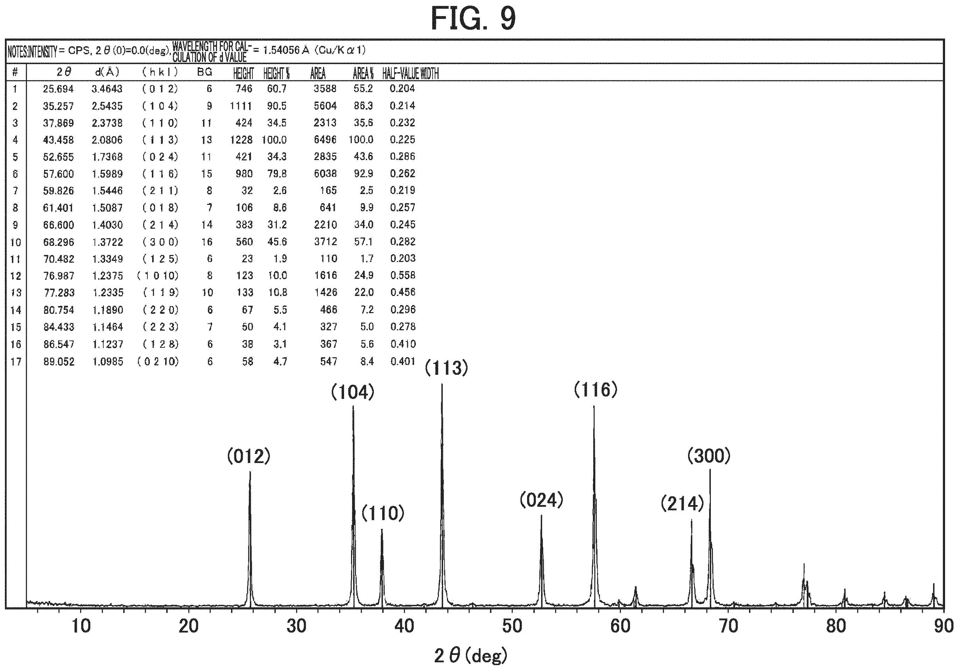

Table 2 shows the full width at half maximum (FWHM) values of the (012), (104), (113), (116), and (300) diffraction lines for the alumina powders of Examples 1, 2, and 3. FIG. 9 shows the XRD pattern of the alumina powder of Example 1.

Table 2 indicates that all the diffraction line peaks of the alumina powder of Example 1 have full width at half maximum (FWHM) values smaller than those of Example 2 or 3. As shown in FIG. 9, the XRD pattern of the alumina powder of Example 1 was observed to have very few diffraction lines derived from crystal phases other than $\alpha$-alumina. This indicates that the alumina powder of Example 1 has little crystalline distortion and very high crystallinity and contains very few heterophases.

[Table 2]

| Table 2: FWHM and $\alpha$-phase content | | | | | | |
|---|---|---|---|---|---|---|
| | (012) r plane | (104) c plane | (113) n plane | (116) | (300) m plane | $\alpha$-Phase content (%) |
| Example 1 | 0.204 | 0.214 | 0.225 | 0.262 | 0.282 | 93.7 |

(continued)

| Table 2: FWHM and $\alpha$-phase content | | | | | | |
|---|---|---|---|---|---|---|
| | (012) r plane | (104) c plane | (113) n plane | (116) | (300) m plane | $\alpha$-Phase content (%) |
| Example 2* | 0.214 | 0.230 | 0.257 | 0.305 | 0.309 | 89.5 |
| Example 3* | 0.225 | 0.246 | 0.306 | 0.319 | 0.289 | 68.3 |
| Note: The symbol "*" indicates a comparative example. | | | | | | |

Slurry Properties (Viscosity)

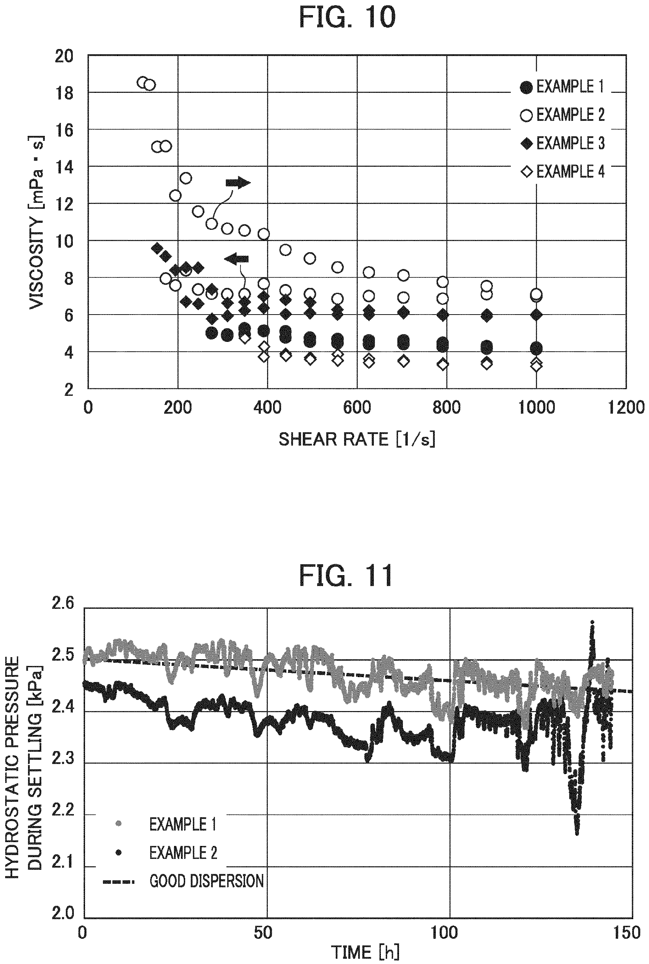

FIG. 10 shows the relationship between the shear rate and the viscosity for the slurries containing the alumina powders of Examples 1 to 4. FIG. 10 shows both the viscosity at increasing shear rates (indicated by the right-pointing arrow for some of the samples in the drawing) and the viscosity at decreasing shear rates (indicated by the left-pointing arrow in the drawing).

The slurry of Example 1 had an almost constant low viscosity regardless of shear rate. Moreover, the slurry of Example 1 had almost no difference between the viscosity at increasing shear rates and that at decreasing shear rates and showed a reversible response for the shear rate. This indicates that the slurry of Example 1 has a stable low viscosity and exhibits a reversible response for shear rate. On the other hand, the slurry of Example 2 or 3 had a high viscosity. In particular, the slurry of Example 2 had a significant difference between the viscosity at increasing shear rates and that at decreasing shear rates and showed an irreversible response for the shear rate although it had an average alumina particle size substantially equal to that of Example 1. The slurry of Example 4 had an almost constant low viscosity regardless of shear rate like that of Example 1.

The viscosity measurement suggests as follows. The alumina particles in the slurry of Example 1 have rounded shapes and uniform sizes while they are fine. In the slurry with such features, the particles upon contacting or colliding with one another can quickly separate from one another and thus less interfere with one another. Thus, the slurry with such features has a stable low viscosity. On the other hand, the slurry of Example 2 contains angularly shaped particles and also contains chipped particles and thus has a broad particle size distribution although the particle size of the alumina powder in the slurry of Example 2 is almost similar to that of Example 1. In the slurry of Example 2 with such features, therefore, the particles upon contacting or colliding with one another can interfere with one another, which can make the slurry viscosity unstable. The slurry of Example 4 has a low viscosity because it contains coarse alumina particles.

Slurry Properties (Hydrostatic Pressure During Settling) FIG. 11 shows changes in hydrostatic pressure during settling over time for the slurries containing the alumina powders of Examples 1 and 2. FIG. 11 also shows a hydrostatic pressure line during settling for an ideal slurry in a high dispersion state (high dispersion line). The slurry of Example 1 showed a small change in hydrostatic pressure during settling over time and had a dispersion state close to the ideal high dispersion state. On the other hand, the slurry of Example 2 showed a large change in hydrostatic pressure during settling. This suggests that the slurry of Example 1 can maintain a high dispersion state for a long time whereas the slurry of Example 2 can partially undergo aggregation.

Dielectric Properties of Sintered Products Table 3 shows the dielectric properties (relative permittivity $\varepsilon r$, dielectric loss tangent (tan $\delta$), and $(\varepsilon r)^{1/2} \times$ tan $\delta$) of the sintered alumina products of Examples 1, 2, and 4. In this regard, Table 3 also shows the properties of polytetrafluoroethylene (PTFE).

In the high-frequency range (5 GHz and 10 GHz), the dielectric loss tangent and $(\varepsilon r)^{1/2} \times$ tan $\delta$ of the sintered alumina product of Example 1 were lower than those of the other samples. This indicates that the sintered product of Example 1 can be an excellent antenna material with low transmission loss.

In contrast, the dielectric loss tangent and $(\varepsilon r)^{1/2} \times$ tan $\delta$ of the sintered product of Example 2 in the high frequency range (5 GHz and 10 GHz) were higher than those of Example 1. This may be because the alumina powder of Example 2 has a BET specific surface area larger than that of Example 1 and thus can provide a lower molding density, which can cause the sintered product to have pores (defects) and affected dielectric properties. The dielectric loss tangent and $(\varepsilon r)^{1/2} \times$ tan $\delta$ of the sintered product of Example 4 were larger than those of Example 1 or 2. This may be because the alumina powder of Example 4 contains a large amount of sodium (Na), which may have an adverse effect on the density and electrical resistance of the sintered product. On the other hand, PTFE had a dielectric loss tangent much higher than that of the sintered alumina product (Examples 1, 2, and 4) at 10 GHz although it had a relatively low dielectric loss tangent at 1 GHz.

The transmission loss (a) of antenna materials is proportional to $(\varepsilon r)^{1/2} \times$ tan $\delta$ as shown in Equation (1) below. Therefore, the sintered product of Example 1, which has the lowest transmission loss in the high-frequency range of 10 GHz or more, has been found to be promising as an antenna material.
[Math 2]

$$a = K \times f \times \sqrt{\varepsilon r} \times \tan \delta \cdots (1)$$

[Table 3]

| Table 3: Dielectric properties | | | | | | | |
|---|---|---|---|---|---|---|---|
| | Relative permittivity | | | Dielectric loss tangent ($\times 10^{-9}$) | | | $(\varepsilon r)^{1/2} \times \tan \delta$ ($\times 10^{-4}$) |
| | 1GHz | 5GHz | 10 GHz | 1GHz | SGHz | 10GHz | 10 GHz |
| Example 1 | 10.0 | 10.0 | 10.0 | <10 | 0.10 | 0.13 | 0.41 |
| Example 2* | 10.0 | 9.9 | 9.9 | <10 | 0.16 | 0.18 | 0.57 |
| Example 4* | 10.1 | 9.8 | 9.8 | <10 | 0.9 | 0.7 | 2.19 |
| PTFE* | 2.1 | - | 2.1 | 2 | - | 10 | 14.5 |
| Note: The symbol "*" indicates a comparative example. | | | | | | | |

Experimental Example B

In Experimental Example B, alumina powders were synthesized using $\alpha$-alumina seeds in different particle sizes and different amounts and subjected to the evaluation.

(1) Synthesis of Alumina Powders

Example 5 (Example According to the Invention)

In Example 5, the $\alpha$-alumina seeds used had an average particle size ($D_{50}$) of 0.16 um and a BET specific surface area ($S_{BET}$) of 10.2 m$^2$/g. The content of the $\alpha$-alumina seeds in the raw material mixture was changed to 4 mass%. An alumina powder was synthesized as in Example 1 except for the above.

Example 6 (Example According to the Invention)

The $\alpha$-alumina seeds used had an average particle size ($D_{50}$) of 0.23 um and a BET specific surface area ($S_{BET}$) of 8.29 m$^2$/g. An alumina powder was synthesized as in Example 5 except for the above.

Example 7 (Example According to the Invention)

The content of the $\alpha$-alumina seeds in the raw material mixture was changed to 7 mass%. An alumina powder was synthesized as in Example 5 except for the above.

Example 8 (Example According to the Invention)

The content of the $\alpha$-alumina seeds in the raw material mixture was changed to 7 mass%. An alumina powder was synthesized as in Example 6 except for the above.

Example 9 (Example According to the Invention)

The content of the $\alpha$-alumina seeds in the raw material mixture was changed to 10 mass%. An alumina powder was synthesized as in Example 5 except for the above.

Example 10 (Example According to the Invention)

The content of the $\alpha$-alumina seeds in the raw material mixture was changed to 10 mass%. An alumina powder was synthesized as in Example 6 except for the above.

Example 11 (Example According to the Invention)

The content of the $\alpha$-alumina seeds in the raw material mixture was changed to 20 mass%. An alumina powder was synthesized as in Example 5 except for the above.

Example 12 (Example According to the Invention)

In Example 12, the $\alpha$-alumina seeds used had an average particle size ($D_{50}$) of 0.19 um and a BET specific surface area ($S_{BET}$) of 13.1 m$^2$/g. The content of the $\alpha$-alumina seeds in the raw material mixture was changed to 20 mass%. An alumina powder was synthesized as in Example 5 except for the above.

(2) Evaluation of Alumina Powders

The alumina powders obtained in Examples 5 to 12 were evaluated for powder properties (BET specific surface area, particle size, and pressurized bulk density) in the same manner as for those of Examples 1 to 4. For the evaluation of the sinterability of the alumina powders, sintered alumina products were also prepared in the same manner as for Examples 1 to 4 except that the sintering temperature was changed to a temperature of 1,300 to 1,450°C.

(3) Evaluation Results

Table 4 shows the production conditions and the properties of the alumina powders obtained in Examples 5 to 12. The alumina powder prepared using a constant amount of $\alpha$-alumina seeds having smaller sizes (Examples 5, 7, and 9) had an average particle size ($D_{50}$) smaller than that of the alumina powder prepared using a constant amount of $\alpha$-alumina seeds having larger sizes (Examples 6, 8, and 10). As a result, the alumina powder with such a smaller $D_{50}$ value had a higher pressurized bulk density and formed a sintered product with a higher bulk density. The alumina powder prepared using a smaller amount of $\alpha$-alumina seeds (Examples 5 and 7) had a higher pressurized bulk density and formed a sintered product with a higher density than that prepared using a larger amount of $\alpha$-alumina seeds (Examples 9 and 10) when there was no difference in seed particle size between both cases.

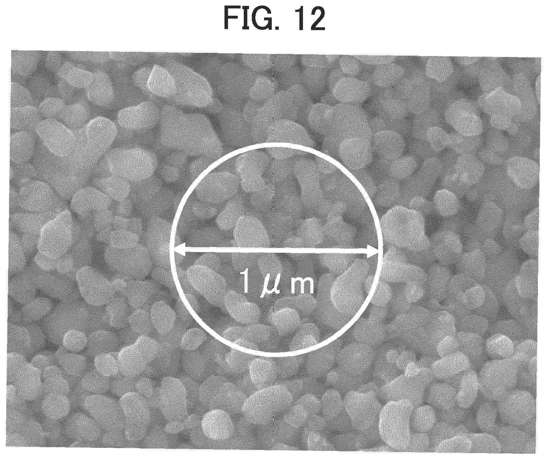

FIG. 12 shows an SEM image of the alumina powder obtained in Example 7. The alumina powder of Example 7 was found to have smaller primary particle sizes and to have undergone almost no aggregation.

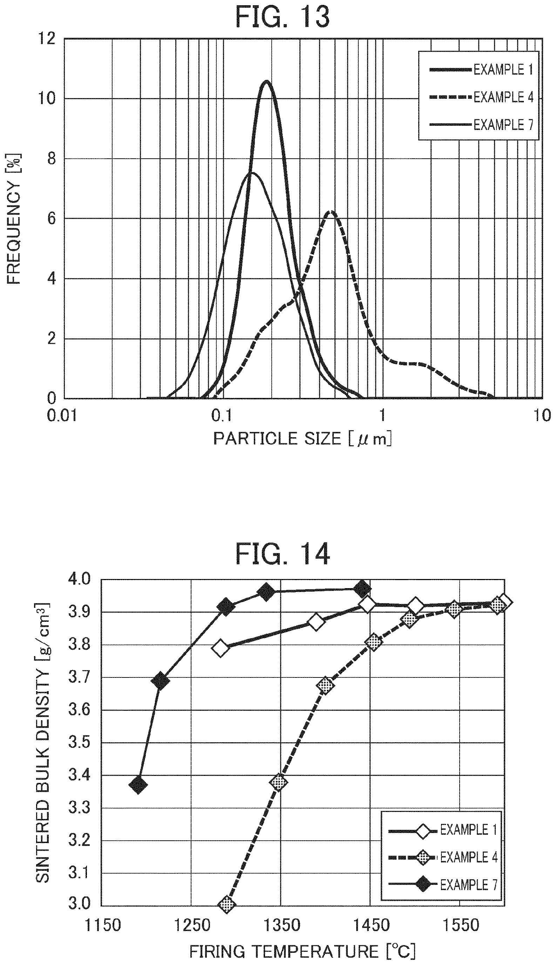

FIG. 13 shows the particle size distribution curve of the alumina powder obtained in Example 7 along with the results obtained for Examples 1 and 4. The alumina powders of Examples 1 and 7, which were prepared with $\alpha$-alumina seeds using dry bead mill processing, were finer and had a more uniform particle size distribution than the conventional alumina powder of Example 4. The alumina powder of Example 7 was much finer than the alumina powder of Example 1, which was prepared using a larger amount of $\alpha$-alumina seeds having larger particle sizes.

FIG. 14 shows the relationship between firing temperature (sintering temperature) and sintered bulk density for the alumina powder obtained in Example 7 along with the results obtained for Examples 1 and 4. The sinterability of the alumina powders of Examples 1 and 7 was found to be significantly higher than that of the conventional alumina powder of Example 4. For example, the firing temperature necessary for the same sintered bulk density was about 200°C lower for the alumina powder of Example 7 than for that of Example 4. Moreover, the alumina powder of Example 7 had much higher sinterability than the alumina powder of Example 1, which was prepared using a larger amount of $\alpha$-alumina seeds with larger particle sizes.

These results indicates that the use of $\alpha$-alumina seeds and dry bead mill processing allows the production of alumina fine powders with high moldability and high sinterability. These results also indicate that the use of a smaller amount of $\alpha$-alumina seeds with a smaller particle size allows the production of alumina finer powders with higher moldability and higher sinterability.

[Table 4]

Table 4: Conditions for alumina powder production and powder properties

| | α-Alumina seeds | | | Alumina powder | | | | | | | | | |
| | $D_{50}$ (μm) | $S_{BET}$ (m²/g) | Content (mass%) | Impurity content (ppm) | | | | $D_{10}$ (μm) | $D_{50}$ (μm) | $D_{90}$ (μm) | $(D_{90}-D_{10})/D_{50}$ | $S_{BET}$ (m²/g) | $D_{50}{\times}S_{BET}$ (10⁻⁶ m³/g) |
| | | | | Na | Si | Fe | Ca | | | | | | |
|---|---|---|---|---|---|---|---|---|---|---|---|---|---|
| Examples | 0.16 | 10.2 | 4 | - | - | - | - | 0.09 | 0.16 | 0.30 | 1.35 | 10.7 | 1.7 |
| Examples | 0.23 | 8.3 | 4 | - | - | - | - | 0.13 | 0.20 | 0.32 | 0 . 94 | - | - |
| Example7 | 0.16 | 10.2 | 7 | 4 | 7 | 2 | 2 | 0.09 | 0.15 | 0.27 | 1.24 | 10.9 | 1.6 |
| Examples | 0.23 | 8.3 | 7 | - | - | - | - | 0.13 | 0.20 | 0.32 | 0.96 | - | - |
| Example9 | 0.16 | 10.2 | 10 | - | - | - | - | 0.09 | 0.15 | 0.27 | 1.23 | 12.5 | 1.9 |
| Example10 | 0.23 | 8.3 | 10 | - | - | - | - | 0.08 | 0.19 | 0.25 | 1.25 | 11.9 | 1.6 |
| Example11 | 0.16 | 10.2 | 20 | - | - | - | - | 0.13 | 0.19 | 0.32 | 1.02 | - | - |
| Example12 | 0.19 | 13.1 | 20 | - | - | - | - | 0.11 | 0.18 | 0.28 | 0.97 | 10.9 | 1.9 |

Note 1: The symbol "-" indicates "not-measured".

[Table 5]

| Table 4 (continued): Conditions for alumina powder production and powder properties | | | | |
|---|---|---|---|---|
| | | Alumina powder | | |
| | GD (g/cm$^3$) | Sintered bulk density (g/cm$^3$) | | |
| | | 1300°C | 1350°C | 1450°C |
| Examples | 2.31 | 3.91 | 3.95 | 3.97 |
| Example6 | 2.23 | 3.80 | 3.92 | 3.97 |
| Example7 | 2.39 | 3.92 | 3.96 | 3.97 |
| Examples | 2.27 | 3.77 | 3.92 | 3.97 |
| Example9 | 2.29 | 3.82 | - | 3.92 |
| Example 10 | 2.22 | 3.75 | 3.86 | 3.89 |
| Example11 | 2.28 | 3.75 | - | 3.99 |
| Example12 | 2.29 | 3.79 | - | 3.92 |

**Claims**

1. A high-purity fine-grained alumina powder comprising alumina particles having a particle size ($D_{50}$) at a cumulative volume of 50% in a volume particle size distribution and a BET specific surface area ($S_{BET}$) , the particle size ($D_{50}$) and the BET specific surface area ($S_{BET}$) satisfying relationships represented by the formulae: $D_{50} \leq 0.20$ um; and $D_{50} \times S_{BET} \leq 2.0 \times 10^{-6}$ m$^3$/g, the alumina particles having a sodium (Na) content of 10 ppm or less, a silicon (Si) content of 10 ppm or less, an iron (Fe) content of 10 ppm or less, and a calcium (Ca) content of 10 ppm or less.

2. The high-purity fine-grained alumina powder according to claim 1, wherein the particle size ($D_{50}$) at a cumulative volume of 50% in the volume particle size distribution and the BET specific surface area ($S_{BET}$) satisfy relationships represented by the formulae: $D_{50} \leq 0.17$ um; and $D_{50} \times S_{BET} \leq 1.8 \times 10^{-6}$ m$^3$/g.

3. The alumina powder according to claim 1 or 2, wherein the alumina powder satisfies a relationship represented by the formula: $1.55 \times 10^{-6}$ m$^3$/g $\leq D_{50} \times S_{BET}$.

4. The alumina powder according to any one of claims 1 to 3, wherein the alumina powder has an X-ray diffraction profile having a (113) diffraction line with a full width at half maximum (FWHM) of 0.240° or less.

5. The alumina powder according to any one of claims 1 to 4, wherein the alumina powder has a pressurized bulk density (GD) of 2.20 g/cm$^3$ or more.

6. The alumina powder according to any one of claims 1 to 5, wherein the alumina powder has particle sizes $D_{10}$, $D_{50}$, and $D_{90}$, respectively, at cumulative volumes of 10%, 50%, and 90% in the volume particle size distribution, and the particle sizes $D_{10}$, $D_{50}$, and $D_{90}$ satisfy a relationship represented by the formula: $(D_{90} - D_{10})/D_{50} \leq 1.5$.

7. The alumina powder according to any one of claims 1 to 6, wherein the alumina powder has an $\alpha$-phase content of 80.0% or more.

8. A method for producing the alumina powder according to any one of claims 1 to 7, the method comprising:

   providing an aluminum hydroxide powder and $\alpha$-alumina seeds;
   mixing the aluminum hydroxide powder with the $\alpha$-alumina seeds to form an aluminum hydroxide-containing raw material containing 1 to 20 mass% of the $\alpha$-alumina seeds;
   subjecting the aluminum hydroxide-containing raw material to mechanochemical processing with a dry bead mill to produce amorphous aluminum hydroxide having a crystal water content of 21.0 mass% or less and exhibiting an exothermic peak in a temperature range of 750 to 850°C during differential scanning calorimetric analysis; and

heat-treating the amorphous aluminum hydroxide at a temperature in a range of 900 to 1,100°C to produce an alumina powder;

wherein the $\alpha$-alumina seeds as provided have an average particle size ($D_{50}$) of 0.1 to 0.5 $\mu$m.

9. The method according to claim 8, wherein the $\alpha$-alumina seeds as provided have an average particle size ($D_{50}$) of 0.1 to 0.3 um, and the aluminum hydroxide-containing raw material contains 3 to 5 mass% of the $\alpha$-alumina seeds.

# FIG. 1

# FIG. 2

# FIG. 3

# FIG. 4

# FIG. 5

# FIG. 6

# FIG. 7

# FIG. 8

## FIG. 9

NOTES:INTENSITY = CPS, 2θ (0)=0.0(deg), WAVELENGTH FOR CALCULATION OF d VALUE = 1.54056 Å (Cu/Kα1)

| # | 2θ | d(Å) | (h k l) | BG | HEIGHT | HEIGHT % | AREA | AREA % | HALF-VALUE WIDTH |
|---|------|--------|-----------|----|--------|----------|------|--------|------------------|
| 1 | 25.694 | 3.4643 | (0 1 2) | 6 | 746 | 60.7 | 3588 | 55.2 | 0.204 |
| 2 | 35.257 | 2.5435 | (1 0 4) | 9 | 1111 | 90.5 | 5604 | 86.3 | 0.214 |
| 3 | 37.869 | 2.3738 | (1 1 0) | 11 | 424 | 34.5 | 2313 | 35.6 | 0.232 |
| 4 | 43.458 | 2.0806 | (1 1 3) | 13 | 1228 | 100.0 | 6496 | 100.0 | 0.225 |
| 5 | 52.655 | 1.7368 | (0 2 4) | 11 | 421 | 34.3 | 2835 | 43.6 | 0.286 |
| 6 | 57.600 | 1.5989 | (1 1 6) | 15 | 980 | 79.8 | 6038 | 92.9 | 0.262 |
| 7 | 59.826 | 1.5446 | (2 1 1) | 8 | 32 | 2.6 | 165 | 2.5 | 0.219 |
| 8 | 61.401 | 1.5087 | (0 1 8) | 7 | 106 | 8.6 | 641 | 9.9 | 0.257 |
| 9 | 66.600 | 1.4030 | (2 1 4) | 14 | 383 | 31.2 | 2210 | 34.0 | 0.245 |
| 10 | 68.296 | 1.3722 | (3 0 0) | 16 | 560 | 45.6 | 3712 | 57.1 | 0.282 |
| 11 | 70.482 | 1.3349 | (1 2 5) | 6 | 23 | 1.9 | 110 | 1.7 | 0.203 |
| 12 | 76.987 | 1.2375 | (1 0 10) | 8 | 123 | 10.0 | 1616 | 24.9 | 0.558 |
| 13 | 77.283 | 1.2335 | (1 1 9) | 10 | 133 | 10.8 | 1426 | 22.0 | 0.456 |
| 14 | 80.754 | 1.1890 | (2 2 0) | 6 | 67 | 5.5 | 466 | 7.2 | 0.296 |
| 15 | 84.433 | 1.1464 | (2 2 3) | 7 | 50 | 4.1 | 327 | 5.0 | 0.278 |
| 16 | 86.547 | 1.1237 | (1 2 8) | 6 | 38 | 3.1 | 367 | 5.6 | 0.410 |
| 17 | 89.052 | 1.0985 | (0 2 10) | 6 | 58 | 4.7 | 547 | 8.4 | 0.401 |

2θ (deg)

(012) (104) (110) (113) (024) (116) (214) (300)

## FIG. 10

## FIG. 11

# FIG. 12

## FIG. 13

## FIG. 14

## INTERNATIONAL SEARCH REPORT

International application No.

**PCT/JP2021/039710**

| A. | CLASSIFICATION OF SUBJECT MATTER |
|---|---|

*C01F 7/02*(2022.01)i; *C01F 7/441*(2022.01)i
FI:   C01F7/02; C01F7/441

According to International Patent Classification (IPC) or to both national classification and IPC

| B. | FIELDS SEARCHED |
|---|---|

Minimum documentation searched (classification system followed by classification symbols)

C01F7/02; C01F7/44

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2008/035656 A1 (SUMITOMO CHEMICAL COMPANY, LIMITED) 01 May 2008 (2008-05-01)<br>    entire text | 1-9 |
| A | WO 2016/098579 A1 (SUMITOMO CHEMICAL COMPANY, LIMITED) 23 June 2016 (2016-06-23)<br>    entire text | 1-9 |
| A | WO 2018/047871 A1 (SUMITOMO CHEMICAL COMPANY, LIMITED) 15 March 2018 (2018-03-15)<br>    entire text | 1-9 |
| A | WO 2008/072501 A1 (NIPPON LIGHT METAL COMPANY, LTD) 19 June 2008 (2008-06-19)<br>    entire text | 1-9 |
| A | JP 01-298018 A (NIPPON LIGHT METAL COMPANY, LTD) 01 December 1989 (1989-12-01)<br>    entire text | 1-9 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/039710**

**C.      DOCUMENTS CONSIDERED TO BE RELEVANT**

| Category* | Citation of document, with indication, where appropriate, of the relevant passages | Relevant to claim No. |
|---|---|---|
| A | JP 01-176215 A (NIPPON LIGHT METAL COMPANY, LTD) 12 July 1989 (1989-07-12)<br>entire text | 1-9 |
| E, X | JP 2021-187710 A (NIPPON LIGHT METAL COMPANY, LTD) 13 December 2021<br>(2021-12-13)<br>claims 1-6, paragraph [0044], examples | 1, 3-8 |

Form PCT/ISA/210 (second sheet) (January 2015)

INTERNATIONAL SEARCH REPORT
Information on patent family members

International application No.

**PCT/JP2021/039710**

| Patent document cited in search report | | | Publication date (day/month/year) | Patent family member(s) | | | Publication date (day/month/year) |
|---|---|---|---|---|---|---|---|
| WO | 2008/035656 | A1 | 01 May 2008 | US | 2010/0040535 | A1 | |
| | | | | entire text | | | |
| | | | | EP | 2070873 | A1 | |
| | | | | JP | 2008-100903 | A | |
| WO | 2016/098579 | A1 | 23 June 2016 | US | 2017/0054122 | A1 | |
| | | | | entire text | | | |
| | | | | US | 2018/0277814 | A1 | |
| | | | | EP | 3128597 | A1 | |
| | | | | JP | 2017-165651 | A | |
| WO | 2018/047871 | A1 | 15 March 2018 | US | 2019/0051906 | A1 | |
| | | | | entire text | | | |
| | | | | EP | 3401281 | A1 | |
| WO | 2008/072501 | A1 | 19 June 2008 | US | 2010/0021374 | A1 | |
| | | | | entire text | | | |
| | | | | EP | 2119672 | A1 | |
| | | | | JP | 2008-150238 | A | |
| JP | 01-298018 | A | 01 December 1989 | (Family: none) | | | |
| JP | 01-176215 | A | 12 July 1989 | (Family: none) | | | |
| JP | 2021-187710 | A | 13 December 2021 | (Family: none) | | | |

Form PCT/ISA/210 (patent family annex) (January 2015)

**EP 4 424 639 A1**

**REFERENCES CITED IN THE DESCRIPTION**

**Patent documents cited in the description**

- WO 2018047871 A